# FASCICULE DE BREVET EUROPEEN

(11) **EP 1 188 912 B1**
(45) Date de publication et mention de la délivrance du brevet: **02.05.2007**
(21) Numéro de dépôt: 01402368.3
(22) Date de dépôt: 14.09.2001
(51) Int. Cl.: F02B 31/08

(54) **Dispositif d'admission d'air dans un cylindre de moteur à combustion**
Luftansaugkanalsystem für eine Brennkraftmaschine
Air intake system for an IC engine

(30) Priorité: 15.09.2000 FR 0011809
(43) Date de publication de la demande: 20.03.2002
(73) Titulaire: Renault s.a.s., 92100 Boulogne Billancourt (FR)
(72) Inventeur: Dupont, Alain, 78860 Saint Nom la Breteche (FR); Soltani, Said, 91850 Bouray/Guine (FR)

(56) Documents cités:
- DE-A- 4 017 066
- DE-A- 19 919 533
- DE-A- 19 942 169
- FR-A- 2 724 414
- GB-A- 2 298 896
- US-A- 4 856 473

## Description

La présente invention est relative à un dispositif d'admission d'air dans un cylindre de moteur à combustion, en particulier pour un moteur Diesel à injection directe.

Dans les moteurs à combustion interne, qu'il s'agisse des moteurs à essence ou plus des moteurs Diesel à injection directe, il est nécessaire, pour assurer un mélange correct entre l'air et le carburant dans le cylindre, d'imprimer à l'air un mouvement de rotation dans la chambre de combustion. Ce mouvement de rotation autour d'un axe parallèle à l'axe du cylindre, est caractérisé par le rapport de la vitesse de rotation de l'air dans le cylindre à la vitesse de rotation du moteur. On appelle "rapport de tourbillonnement" ou plus généralement "swirl", le rapport entre la vitesse de rotation de l'air créée à l'admission et la vitesse de rotation du moteur. Dans un moteur Diesel à injection directe, un tel rapport de tourbillonnement ou swirl, nécessaire au moment de la phase d'injection, est particulièrement souhaité pour le fonctionnement du moteur à faible charge.

On définit en outre la perméabilité dans un cylindre de moteur à combustion, en particulier de moteur Diesel, comme étant le rapport de la section effective de passage dégagée par la soupape d'admission à la section transversale du cylindre. La perméabilité dépend donc, non seulement de la différence de pression de part et d'autre de la soupape d'admission, mais également du débit d'air admis dans le cylindre.

Généralement, une augmentation du swirl est associée à une chute importante de la perméabilité, en raison d'une diminution de la section de passage à l'admission.

Lors du dimensionnement d'un moteur Diesel à injection directe, on cherche généralement à optimiser tout d'abord le fonctionnement du moteur à pleine charge. On peut également choisir une valeur de swirl qui représente un compromis sur l'ensemble de la plage de fonctionnement du moteur, avec un ou deux conduits d'admission. Cette valeur de swirl ne correspond cependant pas, dans ce cas, à la valeur optimale qui serait nécessaire pour les fortes charges, ni pour les charges faibles.

La demande de brevet japonais JP 11022470 (TOYOTA) décrit un dispositif d'admission pour un moteur à essence comportant deux conduits d'admission par cylindre, l'un des conduits étant équipé d'une paroi le séparant en deux parties. Deux papillons sont prévus, l'un agissant sur la section totale du conduit non divisé, l'autre sur une des deux parties du conduit divisé. Cette structure particulière est utilisée pour une injection optimisée du carburant, lorsque le moteur fonctionne avec un mélange pauvre. Le but de cette disposition est de réduire l'encrassement de la bougie. La disposition des deux conduits d'admission est telle, à l'endroit où ils débouchent dans le cylindre, qu'il n'est pas possible d'obtenir un swirl naturel lorsque les moyens d'obturation sont en position ouverte dans les deux conduits. Le problème de l'établissement d'un swirl n'est d'ailleurs nullement évoqué dans ce document antérieur.

La demande de brevet britannique GB 2311328 (FORD MOTOR) décrit un dispositif d'admission comportant un conduit unique d'admission par cylindre, divisé en deux parties par une cloison interne de séparation. Un clapet d'obturation réglable est disposé à l'entrée de l'une des deux parties du conduit. On obtient ainsi une action sur le swirl en fonction du réglage du clapet d'obturation et selon le point de fonctionnement du moteur. Le but recherché est de permettre une transition douce entre les différents modes de fonctionnement du moteur. Rien n'est indiqué sur la nécessité de maintenir une perméabilité élevée et d'optimiser les valeurs de swirl et de perméabilité, quel que soit le mode de fonctionnement du moteur.

La demande de brevet japonais JP 80 61 072 (FUJI) décrit un dispositif d'admission à deux conduits par cylindre, munis de clapets d'obturation réglables, l'ensemble étant agencé de façon à produire un mouvement de rotation de l'air autour d'un axe parallèle à celui du cylindre (swirl), ainsi qu'un mouvement de rotation de l'air autour d'un axe orthogonal à celui du cylindre (tumble). La manière dont les conduits d'admission débouchent dans le cylindre, est telle qu'il n'est pas possible d'obtenir un swirl naturel lorsque les dispositifs d'obturation sont ouverts aux régimes élevés du moteur.

Le document DE 199 42 169 A décrit un dispositif d'admission d'air dans un cylindre de moteur à combustion comme dans le préambule de la revendication 1.

La présente invention a pour objet un dispositif d'admission d'air dans un cylindre de moteur à combustion qui ne présente pas les inconvénients des dispositifs connus, et qui permette en particulier d'augmenter la valeur du swirl sans entraîner de chute trop importante de la perméabilité, autorisant ainsi l'obtention d'un compromis swirl/perméabilité optimisé pour tous les points de fonctionnement du moteur.

L'invention a également pour objet un tel dispositif d'admission, qui permette d'obtenir naturellement un mouvement de swirl associé à une perméabilité élevée, contribuant à un meilleur remplissage du moteur pour les charges élevées de fonctionnement du moteur.

Le dispositif d'admission d'air dans un cylindre de moteur à combustion selon l'invention, comprend au moins deux conduits d'admission reliant la culasse du moteur à la zone d'admission dans le cylindre, obturables chacun par une soupape d'admission. Les orifices des deux conduits d'admission débouchant dans le cylindre sont disposés de façon que la droite joignant le centre desdits orifices dans un plan perpendiculaire à l'axe du cylindre, fasse un angle compris entre 30° et 90° avec la face en regard de la culasse. De plus, les deux conduits sont divisé en deux parties par une paroi interne de séparation et des moyens d'obturation règlables de manière progressive sont montés dans l'une des parties de chaque conduit divisé.

Grâce à cette stucture, on obtient un mouvement de swirl appréciable même lorsque les moyens d'obturation sont ouverts et une augmentation continue et progressive de ce mouvement de swirl par action sur les moyens d'obturation dans le sens de la fermeture, de façon à adapter le swirl à chaque phase du fonctionnement du moteur. De plus, l'utilisation de deux conduits d'admission permet de bénéficier d'une perméabilité élevée pour tous les points de fonctionnement, contribuant ainsi à un meilleur remplissage du moteur.

La partie de conduit comportant les moyens d'obturation est avantageusement celle qui débouche dans le cylindre à l'endroit le plus éloigné de la paroi cylindrique externe du cylindre.

Les moyens d'obturation peuvent être commandés simultanément pour les deux conduits ou, en variante, de manière individuelle pour chaque conduit, selon l'effet recherché.

Chaque paroi interne de séparation s'étend de préférence sur toute la longueur du conduit, depuis l'entrée de la culasse jusqu'à proximité de l'axe de la soupape d'admission correspondante bien que l'on puisse également utiliser des parois de séparation plus courtes.

Les moyens d'obturation peuvent comprendre un clapet mobile en translation du type guillotine, un clapet rotatif autour d'un axe perpendiculaire à l'axe du conduit, du type papillon, monté à l'intérieur du conduit ou du type boisseau, monté en partie à l'extérieur du conduit.

De préférence, les conduits débouchent sensiblement tangentiellement dans le cylindre.

L'invention trouve son application principale dans les moteurs Diesel à injection directe. Elle peut également être utilisée dans les moteurs à essence.

L'invention sera mieux comprise à l'étude d'un mode de réalisation décrit à titre d'exemple nullement limitatif et illustré par les figures annexées, sur lesquelles :
- la figure 1 est une vue de dessus très schématique d'un cylindre de moteur Diesel à injection directe, montrant également la position des conduits d'admission et leurs moyens d'obturation;
- la figure 2 illustre schématiquement, en vue de côté, un conduit d'admission comportant un moyen d'obturation, selon une première variante; et
- la figure 3 est une vue schématique analogue à la figure 2, montrant une autre variante de moyens d'obturation.

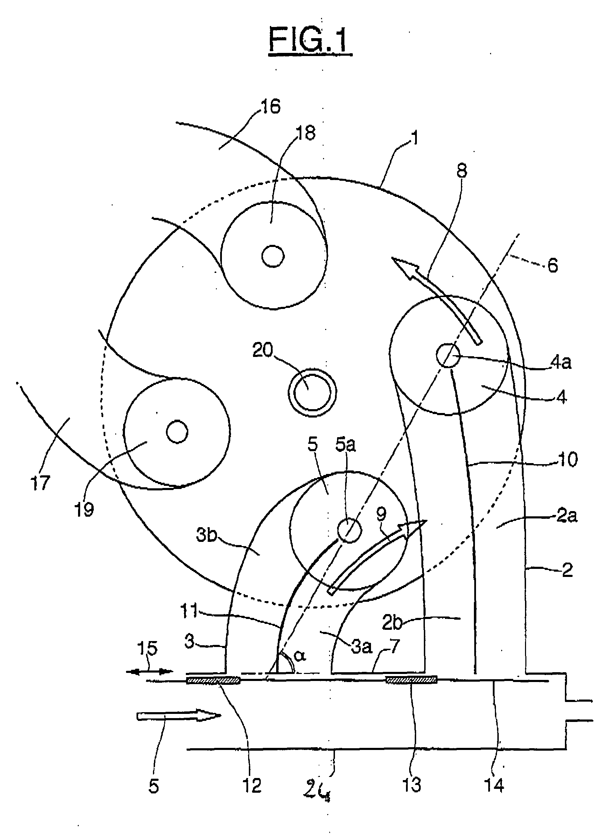

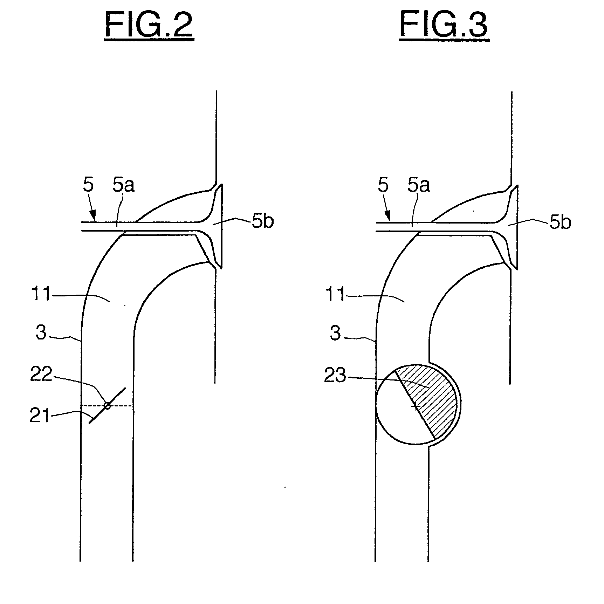

Tel qu'il est illustré sur la figure 1, le dispositif d'admission, adapté à un moteur Diesel à injection directe, comprend pour chaque cylindre 1 deux conduits d'admission 2, 3 reliant la face supérieure de la chambre de combustion à l'entrée de la culasse 24 par laquelle pénètre l'air selon la flèche 5. Chaque conduit 2, 3 débouche dans le cylindre 1 sur une soupape d'admission 4, 5, qui comporte une tige 4a, 5a reliée à la tête de soupape 5b visible sur la figure 2.

Les deux conduits 2 et 3 sont placés de façon qu'ils débouchent dans le cylindre d'une manière particulière. En effet, la droite 6 en tirets sur la figure 1 qui joint le centre des orifices des conduits d'admission 2 et 3 débouchant dans le cylindre 1 et qui joint également les axes des tiges 4a, 5a des soupapes 4, 5, fait un angle α avec la face en regard 7 de la culasse. Dans l'exemple illustré, l'angle α est de l'ordre de 60°. Selon l'invention, il convient de faire en sorte que cet angle α reste compris entre environ 30° et 90°. Les deux conduits 2, 3 sont en outre disposés de façon qu'ils débouchent dans le cylindre 1 d'une manière sensiblement tangentielle par rapport audit cylindre 1, comme on peut le voir sur la figure 1. En d'autres termes, la direction générale de sortie de l'air issu des conduits d'admission 2 et 3, représentée sur la figure 1 par les flèches 8 et 9, est sensiblement tangentielle à la paroi externe du cylindre 1. Grâce à ces dispositions, on obtient un effet de rotation de l'air en swirl important dans le cylindre.

Les deux conduits 2, 3 sont chacun divisés en deux parties par une paroi interne de séparation 10, 11 qui s'étend sur toute la longueur du conduit correspondant 2, 3, c'est-à-dire depuis l'orifice d'entrée du conduit en liaison avec l'entrée de la culasse 24 jusqu'à proximité immédiate de l'axe 4a, 5a de la soupape d'admission correspondante. En variante, on pourrait imaginer une paroi de séparation plus courte, n'allant pas jusqu'à l'axe de la soupape correspondante.

La paroi de séparation 10 divise le conduit d'admission 2 en une première partie extérieure 2a et une deuxième partie intérieure 2b qui débouche plus près de l'axe du cylindre 1 que la partie extérieure 2a, laquelle débouche plus près de la paroi externe périphérique du cylindre 1.

De la même manière, la paroi de séparation 11 divise le conduit d'admission 3 en une partie extérieure 3a et une partie intérieure 3b, la partie intérieure 3b débouchant dans le cylindre plus près de l'axe du cylindre 1 que la partie 3a qui débouche quant à elle plus près de la surface périphérique externe du cylindre 1.

Des moyens d'obturation, constitués dans l'exemple illustré sur la figure 1 par des clapets mobiles en translation, référencés 12 et 13, du type guillotine, sont capables d'obturer l'une des parties de chacun des conduits divisés 2, 3.

Les clapets d'obturation 12, 13 sont montés de façon à pouvoir obturer les parties intérieures 3b et 2b des deux conduits d'admission 2 et 3, ou de les ouvrir complètement, toute position intermédiaire pouvant en outre être adoptée comme illustré sur la figure 1. Le déplacement en translation des clapets 12, 13 se fait au moyen d'une tige de commande 14, qui peut être déplacée en translation dans un sens et dans l'autre selon la flèche 15.

Sur la figure 1, se trouvent également schématiquement représentés deux conduits d'échappement 16, 17 qui coopèrent avec les soupapes d'échappement 18, 19. Enfin, on a également représenté schématiquement, en position sensiblement centrale, un injecteur de carburant 20. On comprendra bien entendu que la position de cet injecteur, comme celle des conduits d'échappement 16, 17, puisse être modifiée sans sortir du cadre de la présente invention. On pourrait également prévoir une seule soupape d'échappement.

La disposition particulière des deux conduits d'admission 2, 3, selon l'invention, permet d'obtenir naturellement, lorsque les clapets d'obturation 12, 13 sont en position complètement ouverte, un bon remplissage en air du moteur avec une perméabilité importante due à l'utilisation de deux conduits définissant une section effective de passage importante pour l'air admis. On obtient de même dans ce cas, un effet de swirl naturel grâce à la disposition particulière des deux soupapes d'admission 4, 5 et l'inclinaison selon l'angle α comprise entre 30° et 90° de la droite joignant les axes des deux soupapes d'admission par rapport à la face en regard de la culasse. Il en résulte en effet une disposition des soupapes d'admission 4 et 5 suffisamment excentrée par rapport à l'axe du cylindre 1, permettant d'obtenir un couple de rotation significatif de l'écoulement sortant par l'orifice des conduits 2 et 3 débouchant dans le cylindre 1. On obtient ainsi, lorsque les systèmes d'obturation sont ouverts, un swirl naturel, associé à une perméabilité importante.

Lorsque les clapets d'obturation 12, 13 sont en position d'obturation complète, l'air ne pénètre dans le cylindre 1 que par les deux parties extérieures 2a, 3a, assurant ainsi un swirl très fort pour les points de fonctionnement du moteur faiblement chargés. La perméabilité reste suffisante grâce à l'existence des deux parties de conduit 2a et 3a.

Dans une position de réglage intermédiaire comme illustré sur la figure 1, il est possible de diminuer progressivement la quantité d'air admis par les parties 2b et 3b de chacun des conduits 2, 3, les plus proches de l'axe du cylindre 1. Ces parties 2b et 3b des conduits 2 et 3 sont celles qui véhiculent l'écoulement d'air qui est le moins favorable à la génération de swirl. Il est ainsi possible d'obtenir, pour chacun des points de fonctionnement du moteur, un compromis optimisé entre le swirl et la perméabilité, en diminuant progressivement les composantes de vitesse de l'air admis qui contribuent le moins au swirl tout en conservant au contraire les composantes de vitesse de l'air admis qui créent le plus de swirl, les parties 2a et 3a des conduits 2 et 3 restant toujours ouvertes.

Le mode de réalisation illustré sur la figure 2 montre un dispositif d'obturation constitué par un papillon 21 rotatif autour d'un axe 22 et monté à l'intérieur du conduit 3.

Le mode de réalisation illustré sur la figure 3 montre en variante un moyen d'obturation constitué par un boisseau rotatif 23 monté en partie à l'extérieur du conduit 3 et qui peut être disposé en haut ou en bas du conduit.

Dans l'exemple illustré, notamment sur la figure 1, les clapets d'obturation 12, 13 sont actionnés ensemble par une seule tige de commande 14. On pourrait bien entendu envisager un actionnement différentiel de chacun des moyens d'obturation correspondant à chacun des deux conduits d'admission.

Bien que l'invention ait été illustrée par un exemple d'utilisation dans un moteur Diesel à injection directe, on comprendra que l'invention puisse également être utilisée dans un moteur à essence et, d'une manière plus générale, chaque fois qu'il est souhaitable de créer un swirl variable en continu sans pour autant sacrifier la perméabilité.

## Revendications

1. Dispositif d'admission d'air dans un cylindre de moteur à combustion, en particulier de moteur Diesel à injection directe ou de moteur à essence, du type comprenant au moins un conduit d'admission reliant la culasse du moteur à la zone d'admission dans le cylindre, obturable par une soupape d'admission, **caractérisé par le fait qu'**il comprend deux conduits d'admission (2, 3) dont les orifices débouchant dans le cylindre sont disposés de façon que la droite joignant le centre desdits orifices dans un plan perpendiculaire à l'axe du cylindre (1), fasse un angle compris entre 30° et 90° avec la face en regard de la culasse (24), les deux conduits étant divisés en deux parties par une paroi interne de séparation (10, 11) et des moyens d'obturation (12, 13) réglables de manière progressive étant montés dans l'une des parties de chaque conduit divisé.

2. Dispositif selon la revendication 1, **caractérisé par le fait que** les deux conduits (2, 3) sont divisés en deux parties par une paroi interne de séparation et des moyens d'obturation règlables de manière progressive sont montés dans l'une des parties de chaque conduit divisé.

3. Dispositif selon les revendications 1 ou 2, **caractérisé par le fait que** la partie (2b, 3b) de conduit comportant les moyens d'obturation est celle qui débouche dans le cylindre à l'endroit le plus éloigné de la paroi cylindrique externe du cylindre.

4. Dispositif selon l'une des revendications 2 ou 3, **caractérisé par le fait que** les moyens d'obturation sont commandés simultanément pour les deux conduits.

5. Dispositif selon l'une quelconque des revendications précédentes, **caractérisé par le fait que** chaque paroi interne de séparation (10, 11) s'étend sur toute la longueur du conduit, depuis la culasse (4) jusqu'à proximité de l'axe (4a, 5a) de la soupape d'admission correspondante.

6. Dispositif selon l'une quelconque des revendications précédentes, **caractérisé par le fait que** les moyens d'obturation comprennent un clapet mobile (12, 13) en translation du type guillotine.

7. Dispositif selon l'une quelconque des revendications 1 à 5, **caractérisé par le fait que** les moyens d'obturation comprennent un clapet rotatif autour d'un axe perpendiculaire à l'axe du conduit, du type papillon (21), monté à l'intérieur du conduit.

8. Dispositif selon l'une quelconque des revendications 1 à 5, **caractérisé par le fait que** les moyens d'obturation comprennent un clapet rotatif autour d'un axe perpendiculaire à l'axe du conduit, du type boisseau (23), monté en partie à l'extérieur du conduit, en haut ou en bas du conduit.

9. Dispositif selon l'une quelconque des revendications précédentes, **caractérisé par le fait que** les conduits (2, 3) débouchent sensiblement tangentiellement dans le cylindre.

## Claims

1. Air intake system for an IC engine, in particular a direct injection Diesel engine or petrol engine, of the type comprising at least one intake port connecting the cylinder head of the engine to the intake area in the cylinder, closable by an inlet valve, **characterized in that** it comprises two intake ports (2, 3) of which the orifices leading into the cylinder are disposed so that the straight line joining the centres of the said orifices in a plane perpendicular to the axis of the cylinder (1) makes an angle of between 30° and 90° with the face opposite the cylinder head (24), the two ports being divided into two portions by an internal partition wall (10, 11) and progressively adjustable closing means (12, 13) being mounted in one of the portions of each divided port.

2. System according to Claim 1, **characterized in that** the two ports (2, 3) are divided into two portions by an internal partition wall and progressively adjustable closing means are mounted in one of the portions of each divided port.

3. System according to Claim 1 or 2, **characterized in that** the port portion (2b, 3b) including the closing means is the portion which leads into the cylinder at the point farthest from the external cylindrical wall of the cylinder.

4. System according to one of Claims 2 or 3, **characterized in that** the closing means are controlled simultaneously for the two ports.

5. System according to any one of the preceding claims, **characterized in that** each internal partition wall (10, 11) extends along the whole length of the port, from the cylinder head (4) to near the axis (4a, 5a) of the corresponding inlet valve.

6. System according to any one of the preceding claims, **characterized in that** the closing means comprise a guillotine-type translational-movement valve (12, 13).

7. System according to any one of Claims 1 to 5, **characterized in that** the closing means comprise a valve rotating about an axis perpendicular to the axis of the port, of the butterfly type (21), mounted inside the port.

8. System according to any one of Claims 1 to 5, **characterized in that** the closing means comprise a valve rotating about an axis perpendicular to the axis of the port, of the ball type (23), mounted partly outside the port, at the top or at the bottom of the port.

9. System according to any one of the preceding claims, **characterized in that** the ports (2, 3) lead essentially tangentially into the cylinder.

## Patentansprüche

1. Vorrichtung zum Einlassen von Luft in einen Verbrennungsmotorzylinder, insbesondere Dieselmotor mit Direkteinspritzung oder Benzinmotor des Typs, der mindestens eine Einlassleitung aufweist, die den Zylinderkopf des Motors mit der Einlasszone in den Zylinder verbindet, verschließbar durch ein Einlassventil, **dadurch gekennzeichnet, dass** sie zwei Einlassleitungen (2, 3) aufweist, deren in den Zylinder mündende Öffnungen so angeordnet sind, dass die Gerade, die die Mitte der Öffnungen in einer Ebene senkrecht zur Achse des Zylinders (1) verbindet, einen Winkel zwischen 30° und 90° mit der Seite gegenüber dem Zylinderkopf (24) bildet, wobei die zwei Leitungen von einer Zwischentrennwand (10, 11) in zwei Teile geteilt sind, wobei Verschlussmittel (12, 13), die stufenlos einstellbar sind, in einem der Teile jeder geteilten Leitung installiert sind.

2. Vorrichtung nach Anspruch 1, **dadurch gekennzeichnet, dass** die zwei Leitungen (2, 3) von einer Innentrennwand in zwei Teile geteilt sind und dass stufenlos einstellbare Verschlussmittel in einem der Teile jeder geteilten Leitung installiert sind.

3. Vorrichtung nach einem der Ansprüche 1 oder 2, **dadurch gekennzeichnet, dass** der Leitungsteil (2b, 3b), der die Verschlussmittel aufweist, der Teil ist, der in den Zylinder an der Stelle mündet, die von der äußeren Wand des Zylinders am weitesten entfernt ist.

4. Vorrichtung nach einem der Ansprüche 2 oder 3, **dadurch gekennzeichnet, dass** die Verschlussmittel gleichzeitig für die zwei Leitungen gesteuert werden.

5. Vorrichtung nach einem der vorhergehenden Ansprüche, **dadurch gekennzeichnet, dass** sich jede Innentrennwand (10, 11) über die ganze Länge der Leitung von dem Zylinderkopf (4) bis in die Nähe der Achse (4a, 5a) des entsprechenden Einlassventils erstreckt.

6. Vorrichtung nach einem der vorhergehenden Ansprüche, **dadurch gekennzeichnet, dass** die Verschlussmittel ein in Verschiebung bewegliches Ventil (12, 13) des Absperrtyps aufweisen.

7. Vorrichtung nach einem der Ansprüche 1 bis 5, **dadurch gekennzeichnet, dass** die Verschlussmittel ein Ventil aufweisen, das um eine Achse senkrecht zu der Achse der Leitung dreht, des Typs Drosselventil (21), das im Inneren der Leitung installiert ist.

8. Vorrichtung nach einem der Ansprüche 1 bis 5, **dadurch gekennzeichnet, dass** die Verschlussmittel ein Ventil aufweisen, das um eine Achse senkrecht zu der Achse der Leitung dreht, des Typs Kugelventil (23), die zum Teil außerhalb der Leitung oberhalb oder unterhalb der Leitung installiert ist.

9. Vorrichtung nach einem der vorhergehenden Ansprüche, **dadurch gekennzeichnet, dass** die Leitungen (2, 3) im Wesentlichen tangential in den Zylinder münden.
